# EUROPEAN PATENT APPLICATION

(11) **EP 4 588 349 A1**
(43) Date of publication of application: **23.07.2025**
(21) Application number: 24152123.6
(22) Date of filing: 16.01.2024
(51) Int. Cl.: A01N 43/68, A01P 13/02

(54) **MIXTURES INCLUDING AZINE COMPOUNDS FOR SELECTIVE WEED CONTROL IN SOY**

(71) Applicant: BASF SE, 67056 Ludwigshafen am Rhein (DE)
(72) Inventor: HARTMUELLER, Martin, 67117 Limburgerhof (DE); WITSCHEL, Matthias, 67056 Ludwigshafen am Rhein (DE); BURHOP, Annina, 67117 Limburgerhof (DE); SEISER, Tobias, 67056 Ludwigshafen am Rhein (DE); DOMBO, Peter, 67117 Limburgerhof (DE); SEITZ, Thomas, 67056 Ludwigshafen am Rhein (DE)
(74) Representative: BASF IP Association

(57) **Abstract**

A method for selectively controlling weeds in soy, which comprises applying to the crop cultivation area an effective amount of a herbicidal mixture comprising as a component 1) a herbicide A of the formula (I) 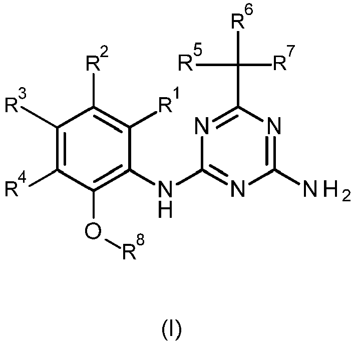 wherein R¹ to R⁸ are as defined above and as component 2) at least one further compound selected from compounds B.

## Description

The present invention relates to a method for selectively controlling weeds in soy, which comprises applying an effective amount of a herbicidal mixture comprising as a component 1) a herbicide A and as component 2) at least one further compound selected from compounds B to the cultivation area of soy, where weeds grow or may grow, as described herein.

The present invention also relates to the use of said herbicidal mixture for selective weed control in soy.

### BACKGROUND ON THE INVENTION

In crop protection products, it is desirable in principle to increase the specificity and the reliability of the action of active compounds. In particular, it is desirable for the crop protection product to control the harmful plants effectively and, at the same time, to be tolerated by the useful plants in question. It is known that in some cases better crop plant compatibility can be achieved by joint application of specifically acting herbicides with organic active compounds, which act as antidotes or antagonists. Owing to the fact that these antidotes or antagonists can reduce or even prevent damage to the crop plants, they are also referred to as safeners.

Generally, it is preferred that a herbicidal compound or a herbicidal mixture controls undesired vegetation effectively and shows an acceptable phytotoxicity towards the crop plant at the same time.

WO 2022/161801 discloses certain azine compounds and compositions comprising the same for controlling unwanted vegetation. While these azine compounds show excellent herbicidal activity, there remains a need for methods to selectively control weeds specifically in soy, that provide efficient control of the undesired vegetation and at the same time are well tolerated by soy.

### SUMMARY OF THE INVENTION

It is an object of the present invention to provide a method for selectively controlling weeds in soy using a herbicidal mixture comprising an azine compound, which allows efficient and reliable control of the weeds which grow or may grow in the cultivation area of a soy and which, at the same time, is well tolerated by said soy.

Moreover, the method should allow for efficient weed control in said soy, without requiring the presence of a safener to prevent or reduce damage to the soy. However in some cases, if required, a safener can be used.

In addition, duration of the herbicidal activity of the composition should be sufficiently long in order to achieve weed control over an adequately long time period, thus allowing a more flexible application.

Surprisingly, it has now been found that weeds that grow or will grow in a cultivation area of soy are selectively controlled by applying to the crop cultivation area an effective amount of an herbicidal mixture comprising as a component 1) a herbicide A selected from a compound of formula (I) and salts of the compound of formula (I) 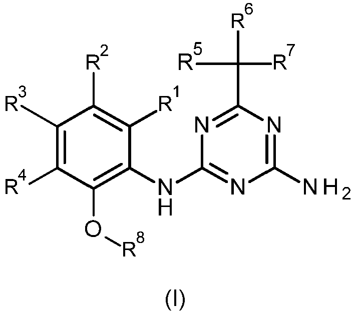 wherein
- R¹: is F;
- R²: is selected from the group consisting of H, halogen;
- R³: is H, F;
- R⁴: is selected from the group consisting of F, C!, Br, I;
- R⁵: is selected from the group consisting of H, halogen and C₁-C₆-alkyl;
- R⁶: is selected from the group consisting of H, halogen, CN, C₁-C₆-alkyl, C₁-C₆-haloalkyl, C₁-C₆-alkoxy and C₁-C₆-haloalkoxy;
- R⁷: is selected from the group consisting of H, halogen, CN, C₁-C₆-alkyl, C₁-C₆-haloalkyl, C₁-C₆-alkoxy and C₁-C₆-haloalkoxy;
- R⁸: is selected from the group consisting of C₁-C₆-alkyl, C₂-C₆-alkenyl, C₂-C₆-alkynyl.

In a preferred embodiment of the method according to present invention, an effective amount of a herbicide A selected from the compound of formula (I) and salts of the compound of formula (I), wherein
- R¹: is F;
- R²: is halogen;
- R³: is H, F;
- R⁴: is selected from the group consisting of F, C!, Br, I;
- R⁵: is halogen;
- R⁶: is C₁-C₆-alkyl;
- R⁷: is C₁-C₆-alkyl;
- R⁸: is C₁-C₆-alkyl; and
as component 2) at least one further compound selected from following compounds B:
B1) is selected from the group of the lipid biosynthesis inhibitors: cyhalofop-butyl, profoxydim, triallate, pinoxaden;
B2) is selected from the group of the ALS inhibitors: bispyribac-sodium, bensulfuron-methyl, ethoxysulfuron, imazapic, imazapyr, imazethapyr, propyrisulfuron, pyribenzoxim, triafamone;
B3) is selected from the group of the photosynthesis inhibitors: atrazine, hexazinone, metribuzin, diuron, bentazon and bentazon-sodium;
B4) is selected from the group of the protoporphyrinogen-IX oxidase inhibitors: epyrifenacil, flumioxazin, pyraclonil, saflufenacil, trifludimoxazin, 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy] acetic acid ethyl ester (CAS 2158274-50-9);
B5) is selected from the group of the bleacher herbicides:
   PDS inhibitors: beflubutamid, bixlozone, diflufenican, fluridone, flurochloridone, flurtamone, norflurazon, picolinafen, 4-(3-trifluoromethylphenoxy)-2-(4-trifluoromethylphenyl)pyrimidine (CAS 180608-33-7), rimisoxafen, HPPD inhibitors: benzobicyclon, isoxaflutole, mesotrione, tembotrione, tolpyralate, topramezone;
B6) from the group of the EPSP synthase inhibitors:
   glyphosate, glyphosate-isopropylammonium, glyposate-potassium and glyphosate-trimesium (sulfosate);
B7) from the group of the glutamine synthase inhibitors:
   glufosinate, glufosinate-P, glufosinate-ammonium and glufosinate-P-ammonium.
B9) is selected from the group of the mitosis inhibitors:
   compounds of group K1: pendimethalin, trifluralin and icafolin methyl;
B10) is selected from the group of the VLCFA inhibitors:
   butachlor, dimethenamid-P, metolachlor-S, pretilachlor, pyroxasulfone;
B13) is selected from the group of the auxinic herbicides:
   2,4-D and its salts and esters such as clacyfos, 2,4-DB and its salts and esters, dicamba and its salts and esters, florpyrauxifen,
B15) is selected from the group of the other herbicides: bromobutide, chlorflurenol, cinmethylin, tetflupyrolimet.

In a more preferred embodiment of the method according to present invention, an effective amount of a herbicide A is used, which is selected from the compound of formula (I) and salts of the compound of formula (I), wherein
- R¹: is F;
- R²: is F;
- R³: is H, F;
- R⁴: is selected from the group consisting of F, Cl, Br;
- R⁵: is F;
- R⁶: is C₁-C₆-alkyl;
- R⁷: is C₁-C₆-alkyl.

In a particularly preferred embodiment of the method according to present invention, the herbicide A is the compound of formula (I.a) or a salt of the compound of formula (I.a)

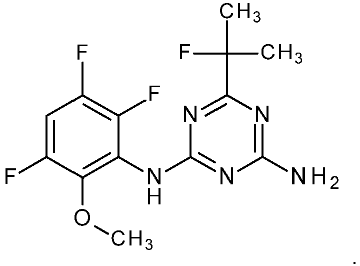

In a further particularly preferred embodiment of the method according to present invention, the herbicide A is the compound of formula (I.b) or salts of the compound of formula (I.b)

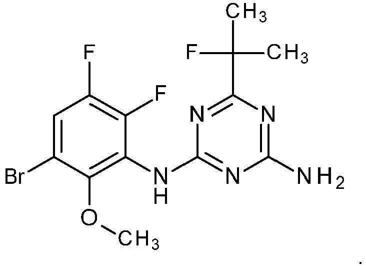

In a further particularly preferred embodiment of the method according to present invention, the herbicide A is the compound of formula (I.c) or salts of the compound of formula (I.c)

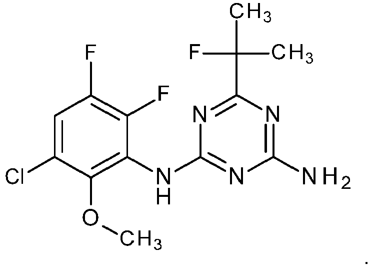

In a further particularly preferred embodiment of the method according to present invention, the herbicide A is the compound of formula (I.d) or salts of the compound of formula (I.d)

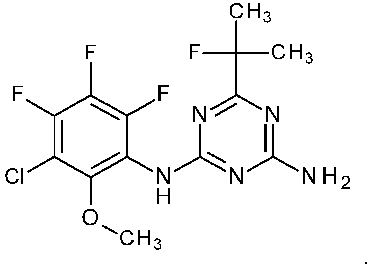

In the methods according to the present invention, the required application rate of the pure active compounds, i.e. of herbicide A, depends on the density of the undesired vegetation, on the development stage of the plants, on the climatic conditions of the location where the composition is used and on the application method.

In a further particularly preferred embodiment of the method according to present invention, the herbicide B is selected from following compounds B:
imazethapyr;
metribuzin;
epyrifenacil, flumioxazin, saflufenacil, trifludimoxazin, 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy] acetic acid ethyl ester (CAS 2158274-50-9);
isoxaflutole;
glyphosate, glyphosate-isopropylammonium, glyposate-potassium and glyphosate-trimesium (sulfosate);
glufosinate, glufosinate-P, glufosinate-ammonium and glufosinate-P-ammonium.
icafolin methyl;
dimethenamid-P, pyroxasulfone;
dicamba and its salts and esters;

The inventive herbicidal mixture can generally be applied to weeds at any growth stage with good results. In one embodiment, the herbicidal mixture is applied up to growth stage 37 of the weeds, showing effective weed control.

The present invention relates to a method for selectively controlling weeds in soy.

In the method according to the present invention for selectively controlling weeds in soy, the herbicidal mixture can generally be applied pre-emergence and or post-emergence of the crop, up to growth stage 29-37 of the crop.

Weeds, which are controlled by the method according to the present invention include monocots and dicots.

The method of the present invention for selectively controlling weeds in soy has several advantages over methods applying structurally similar herbicides:
- The method of the present invention shows superior crop compatibility with certain conventional crop plants, in particular with soy.
- Thus, the method of the invention can also be applied not only before emergence but also after the emergence of the crop plants without the addition of a safener to provide higher timing flexibility.
- The method of the invention provides for an adequate duration of herbicidal activity, even under difficult weathering conditions, which allows a more flexible application and minimizes the risk of weeds escaping.

### DETAILED DESCRIPTION OF THE INVENTION

The present invention is directed to a method for selectively controlling weeds in soy, which comprises applying to the crop cultivation area an effective amount of a herbicidal mixture comprising a herbicide A selected from a compound of formula (I) and salts of the compound of formula (I) 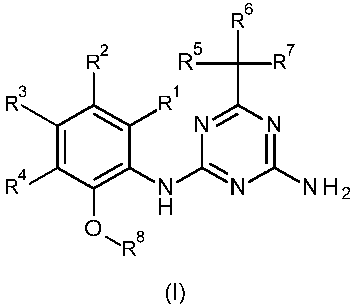 wherein
- R¹: is F;
- R²: is selected from the group consisting of H, halogen;
- R³: is H, F;
- R⁴: is selected from the group consisting of F, C!, Br, I;
- R⁵: is selected from the group consisting of H, halogen and C₁-C₆-alkyl;
- R⁶: is selected from the group consisting of H, halogen, CN, C₁-C₆-alkyl, C₁-C₆-haloalkyl, C₁-C₆-alkoxy and C₁-C₆-haloalkoxy;
- R⁷: is selected from the group consisting of H, halogen, CN, C₁-C₆-alkyl, C₁-C₆-haloalkyl, C₁-C₆-alkoxy and C₁-C₆-haloalkoxy;
- R⁸: is selected from the group consisting of C₁-C₆-alkyl, C₂-C₆-alkenyl, C₂-C₆-alkynyl, and as component 2) at least one further compound selected from following compounds B:

B1) is selected from the group of the lipid biosynthesis inhibitors: cyhalofop-butyl, profoxydim, triallate, pinoxaden;
B2) is selected from the group of the ALS inhibitors: bispyribac-sodium, bensulfuron-methyl, ethoxysulfuron, imazapic, imazapyr, imazethapyr, propyrisulfuron, pyribenzoxim, triafamone; B3) is selected from the group of the photosynthesis inhibitors: atrazine, hexazinone, metribuzin, diuron, bentazon and bentazon-sodium;
B4) is selected from the group of the protoporphyrinogen-IX oxidase inhibitors: epyrifenacil, flumioxazin, pyraclonil, saflufenacil, trifludimoxazin, 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy] acetic acid ethyl ester (CAS 2158274-50-9);
B5) is selected from the group of the bleacher herbicides:
   PDS inhibitors: beflubutamid, bixlozone, diflufenican, fluridone, flurochloridone, flurtamone, norflurazon, picolinafen, 4-(3-trifluoromethylphenoxy)-2-(4-trifluoromethylphenyl)pyrimidine (CAS 180608-33-7), rimisoxafen, HPPD inhibitors: benzobicyclon, isoxaflutole, mesotrione, tembotrione, tolpyralate, topramezone;
B6) from the group of the EPSP synthase inhibitors:
   glyphosate, glyphosate-isopropylammonium, glyposate-potassium and glyphosate-trimesium (sulfosate);
B7) from the group of the glutamine synthase inhibitors:
   glufosinate, glufosinate-P, glufosinate-ammonium and glufosinate-P-ammonium.
B9) is selected from the group of the mitosis inhibitors:
   compounds of group K1: pendimethalin, trifluralin and icafolin methyl;
B10) is selected from the group of the VLCFA inhibitors:
   butachlor, dimethenamid-P, metolachlor-S, pretilachlor, pyroxasulfone;
B13) is selected from the group of the auxinic herbicides:
   2,4-D and its salts and esters such as clacyfos, 2,4-DB and its salts and esters, dicamba and its salts and esters, florpyrauxifen,
B15) is selected from the group of the other herbicides: bromobutide, chlorflurenol, cinmethylin, tetflupyrolimet.

Furthermore, the present invention is directed to agrochemical compositions for selective weed control in soy which comprise the inventive herbicidal mixture and one or more auxiliaries customary for crop protection compositions. In addition, the present invention is directed to an use of said composition for selectively controlling weeds in soy.

As used herein, the terms "controlling" and "combating" are synonyms, referring to inhibition of growth, control of growth, reduction of growth or complete destruction of weeds.

As used herein, the terms "composition of herbicide A" and "composition comprising herbicide A" refer to any composition of a herbicide A. Different salts of the herbicide A are considered as the same herbicide compound.

As used herein, the term "agrochemical composition" refers to a composition of herbicide A (and to a composition comprising herbicide A) and one or more auxiliaries customary for crop protection compositions.

As used herein "herbicide" refers to one or more agents, compounds and/or compositions having herbistatic and/or herbicidal activity.

As used herein, the terms "undesirable vegetation", "undesirable species", "undesirable plants", "harmful plants", "undesirable weeds", "volunteer plants", "weeds" or "harmful weeds" are used synonymously.

As used herein, "post emergence" refers to an herbicide treatment that is applied to an area after the weeds have germinated and emerged from the ground or growing medium.

As used herein, "pre emergence" refers to an herbicide treatment that is applied to an area before the weeds have germinated and emerged from the ground or growing medium.

As used herein, "burndown" refers to when an herbicide is used to reduce weed presence at the time of treatment. Burndown is often used in minimum or no-till fields because the weeds cannot be managed by tilling the soil. The burndown application may be used post-harvest and/or prior to crop emergence. Burndown is especially useful against weeds that emerge between growing seasons.

Here and throughout the specification, the prefixes "Cₙ-Cₘ" used in connection with compounds or molecular moieties each indicate a range for the number of possible carbon atoms that a molecular moiety or a compound can have. The term "C₁-Cₙ-alkyl" denominates a group of linear or branched saturated hydrocarbon radicals having from 1 to n carbon atoms.

Examples of such meanings are:
- C₁-C₃-alkyl and also the C₁-C₃-alkyl moieties of di(C₁-C₃-alkyl)amino, C₁-C₃-alkoxy-C₁-C₃-alkyl: for example CH₃, C₂H₅, n-propyl and CH(CH₃)₂;
- C₁-C₄-alkyl: for example CH₃, C₂H₅, n-propyl, CH(CH₃)₂, n-butyl, CH(CH₃)-C₂H₅, CH₂-CH(CH₃)₂ and C(CH₃)₃;
- C₁-C₆-alkyl and also the C₁-C₆-alkyl moieties of C₁-C₆-cyanoalkyl, C₁-C₆-alkyoxy-C₁-C₆-alkyl, C₁-C₆-alkoxy-C₁-C₆-alkoxy-C₁-C₆-alkyl, di(C₁-C₆-alkoxy)C₁-C₆-alkyl, C₁-C₆-haloalkoxy-C₁-C₆-alkyl, C₃-C₆-alkenyloxy-C₁-C₆-alkyl, C₃-C₆-haloalkenyloxy-C₁-C₆-alkyl, C₃-C₆-alkenyloxy-C₁-C₆-alkoxy-C₁-C₆-alkyl, C₁-C₆-alkylthio-C₁-C₆-alkyl, C₁-C₆-alkylsulfinyl-C₁-C₆-alkyl, C₁-C₆-alkylsulfonyl-C₁-C₆-alkyl, C₁-C₆-alkylcarbonyl-C₁-C₆-alkyl, C₁-C₆-alkoxycarbonyl-C₁-C₆-alkyl, C₁-C₆-haloalkoxycarbonyl-C₁-C₆-alkyl, C₃-C₆-alkenyloxycarbonyl-C₁-C₆-alkyl, C₃-C₆-alkynyloxycarbonyl-C₁-C₆-alkyl: C₁-C₄-alkyl as mentioned above, and also, for example, n-pentyl, 1-methylbutyl, 2-methylbutyl, 3-methylbutyl, 2,2-dimethylpropyl, 1-ethylpropyl, n-hexyl, 1,1-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl or 1-ethyl-2-methylpropyl, preferably methyl, ethyl, n-propyl, 1-methylethyl, n-butyl, 1,1-dimethylethyl, n-pentyl or n-hexyl;
- C₁-C₃-haloalkyl: C₁-C₃-alkyl as mentioned above which is partially or fully substituted by fluorine, chlorine, bromine and/or iodine, for example, chloromethyl, dichloromethyl, trichloromethyl, fluoromethyl, difluoromethyl, trifluoromethyl, chlorofluoromethyl, dichlorofluoromethyl, chlorodifluoromethyl, bromomethyl, iodomethyl, 2-fluoroethyl, 2-chloroethyl, 2-bromoethyl, 2-iodoethyl, 1,1-difluoroethyl, 2,2-difluoroethyl, 2,2,2-trifluoroethyl, 2-chloro-2-fluoroethyl, 2-chloro-2,2-difluoroethyl, 2,2-dichloro-2-fluoroethyl, 2,2,2-trichloroethyl, pentafluoroethyl, 2-fluoropropyl, 3-fluoropropyl, 2,2-difluoropropyl, 2,3-difluoropropyl, 2-chloropropyl, 3-chloropropyl, 2,3-dichloropropyl, 2-bromopropyl, 3-bromopropyl, 3,3,3-trifluoropropyl, 3,3,3-trichloropropyl, 2,2,3,3,3-pentafluoropropyl, heptafluoropropyl, 1-(fluoromethyl)-2-fluoroethyl, 1-(chloromethyl)-2-chloroethyl, 1-(bromomethyl)-2-bromoethyl;
- C₁-C₄-haloalkyl: C₁-C₄-alkyl as mentioned above which is partially or fully substituted by fluorine, chlorine, bromine and/or iodine, for example, chloromethyl, dichloromethyl, trichloromethyl, fluoromethyl, difluoromethyl, trifluoromethyl, chlorofluoromethyl, dichlorofluoromethyl, chlorodifluoromethyl, bromomethyl, iodomethyl, 2-fluoroethyl, 2-chloroethyl, 2-bromoethyl, 2-iodoethyl, 2,2-difluoroethyl, 2,2,2-trifluoroethyl, 2-chloro-2-fluoroethyl, 2-chloro-2,2-difluoroethyl, 2,2-dichloro-2-fluoroethyl, 2,2,2-trichloroethyl, pentafluoroethyl, 2-fluoropropyl, 3-fluoropropyl, 2,2-difluoropropyl, 2,3-difluoropropyl, 2-chloropropyl, 3-chloropropyl, 2,3-dichloropropyl, 2-bromopropyl, 3-bromopropyl, 3,3,3-trifluoropropyl, 3,3,3-trichloropropyl, 2,2,3,3,3-pentafluoropropyl, heptafluoropropyl, 1-(fluoromethyl)-2-fluoroethyl, 1-(chloromethyl)-2-chloroethyl, 1-(bromomethyl)-2-bromoethyl, 4-fluorobutyl, 4-chlorobutyl, 4-bromobutyl, nonafluorobutyl, 1,1,2,2,-tetrafluoroethyl and 1-trifluoromethyl-1,2,2,2-tetrafluoroethyl;
- C₁-C₆-haloalkyl: C₁-C₄-haloalkyl as mentioned above, and also, for example, 5-fluoropentyl, 5-chloropentyl, 5-bromopentyl, 5-iodopentyl, undecafluoropentyl, 6-fluorohexyl, 6-chlorohexyl, 6-bromohexyl, 6-iodohexyl and dodecafluorohexyl;
- C₁-C₃-alkoxy and also the C₁-C₃-alkoxy moieties of C₁-C₃-alkoxy-C₁-C₃-alkyl, C₁-C₃-alkoxycarbonyl: for example methoxy, ethoxy, propoxy;
- C₁-C₄-alkoxy: for example methoxy, ethoxy, propoxy, 1-methylethoxy butoxy, 1-methylpropoxy, 2-methylpropoxy and 1,1-dimethylethoxy;
- C₁-C₆-alkoxy and also the C₁-C₆-alkoxy moieties of C₁-C₆-alkyoxy-C₁-C₆-alkyl, C₁-C₆-alkoxy-C₁-C₆-alkoxy-C₁-C₆-alkyl, di(C₁-C₆-alkoxy)C₁-C₆-alkyl, C₃-C₆-alkenyloxy-C₁-C₆-alkoxy-C₁-C₆-alkyl, C₁-C₆-alkoxycarbonyl-C₁-C₆-alkyl: C₁-C₄-alkoxy as mentioned above, and also, for example, pentoxy, 1-methylbutoxy, 2-methylbutoxy, 3-methoxylbutoxy, 1,1-dimethylpropoxy, 1,2-dimethylpropoxy, 2,2-dimethylpropoxy, 1-ethylpropoxy, hexoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy and 1-ethyl-2-methyl propoxy.
- C₁-C₃-haloalkoxy: a C₁-C₃-alkoxy radical as mentioned above which is partially or fully substituted by fluorine, chlorine, bromine and/or iodine, i.e., for example, fluoromethoxy, difluoromethoxy, trifluoromethoxy, chlorodifluoromethoxy, bromodifluoromethoxy, 2-fluoroethoxy, 2-chloroethoxy, 2-bromomethoxy, 2-iodoethoxy, 2,2-difluoroethoxy, 2,2,2-trifluoroethoxy, 2-chloro-2-fluoroethoxy, 2-chloro-2,2-difluoroethoxy, 2,2-dichloro-2-fluoroethoxy, 2,2,2-trichloroethoxy, pentafluoroethoxy, 2-fluoropropoxy, 3-fluoropropoxy, 2-chloropropoxy, 3-chloropropoxy, 2-bromopropoxy, 3-bromopropoxy, 2,2-difluoropropoxy, 2,3-difluoropropoxy, 2,3-dichloropropoxy, 3,3,3-trifluoropropoxy, 3,3,3-trichloropropoxy, 2,2,3,3,3-pentafluoropropoxy, heptafluoropropoxy, 1-(fluoromethyl)-2-fluoroethoxy, 1-(chloromethyl)-2-chloroethoxy, 1-(bromomethyl)-2-bromoethoxy;
- C₁-C₄-haloalkoxy: a C₁-C₄-alkoxy radical as mentioned above which is partially or fully substituted by fluorine, chlorine, bromine and/or iodine, i.e., for example, fluoromethoxy, difluoromethoxy, trifluoromethoxy, chlorodifluoromethoxy, bromodifluoromethoxy, 2-fluoroethoxy, 2-chloroethoxy, 2-bromomethoxy, 2-iodoethoxy, 2,2-difluoroethoxy, 2,2,2-trifluoroethoxy, 2-chloro-2-fluoroethoxy, 2-chloro-2,2-difluoroethoxy, 2,2-dichloro-2-fluoroethoxy, 2,2,2-trichloroethoxy, pentafluoroethoxy, 2-fluoropropoxy, 3-fluoropropoxy, 2-chloropropoxy, 3-chloropropoxy, 2-bromopropoxy, 3-bromopropoxy, 2,2-difluoropropoxy, 2,3-difluoropropoxy, 2,3-dichloropropoxy, 3,3,3-trifluoropropoxy, 3,3,3-trichloropropoxy, 2,2,3,3,3-pentafluoropropoxy, heptafluoropropoxy, 1-(fluoromethyl)-2-fluoroethoxy, 1-(chloromethyl)-2-chloroethoxy, 1-(bromomethyl)-2-bromoethoxy, 4-fluorobutoxy, 4-chlorobutoxy, 4-bromobutoxy and nonafluorobutoxy;
- C₁-C₆-haloalkoxy and also the C₁-C₆-haloalkoxy moieties of C₁-C₆-haloalkoxy-C₁-C₆-alkyl, C₁-C₆-haloalkoxycarbonyl-C₁-C₆-alkyl: a C₁-C₄-haloalkoxy as mentioned above, and also, for example, 5-fluoropentoxy, 5-chloropentoxy, 5-bromopentoxy, 5-iodopentoxy, undecafluoropentoxy, 6-fluorohexoxy, 6-chlorohexoxy, 6-bromohexoxy, 6-iodohexoxy and dodecafluorohexoxy.

In the context of the present invention, the azine compounds of formula (I), herbicide A, can be employed as such or in the form of their agriculturally acceptable salts. Suitable are, in general, the salts of those cations and the acid addition salts of those acids whose cations and anions, respectively, have no adverse effect on the activity of the active compounds.

Preferred cations are the ions of the alkali metals, preferably of lithium, sodium and potassium, of the alkaline earth metals, preferably of calcium and magnesium, and of the transition metals, preferably of manganese, copper, zinc and iron, further ammonium and substituted ammonium in which one to four hydrogen atoms are replaced by C₁-C₄-alkyl, hydroxy-C₁-C₄-alkyl, C₁-C₄-alkoxy-C₁-C₄-alkyl, hydroxy-C₁-C₄-alkoxy-C₁-C₄-alkyl, phenyl or benzyl, preferably ammonium, methylammonium, isopropylammonium, dimethylammonium, diethylammonium, diisopropylammonium, trimethylammonium, triethylammonium, tris(isopropyl)ammonium, heptylammonium, dodecylammonium, tetradecylammonium, tetramethylammonium, tetraethylammonium, tetrabutylammonium, 2-hydroxyethylammonium (olamine salt), 2-(2-hydroxyeth-1-oxy)eth-1-ylammonium (diglycolamine salt), di(2-hydroxyeth-1-yl)ammonium (diolamine salt), tris(2-hydroxyethyl)ammonium (trolamine salt), tris(2-hydroxypropyl)ammonium, benzyltrimethylammonium, benzyltriethylammonium, N,N,N-trimethylethanolammonium (choline salt), furthermore phosphonium ions, sulfonium ions, preferably tri(C₁-C₄-alkyl)sulfonium, such as trimethylsulfonium, and sulfoxonium ions, preferably tri(C₁-C₄-alkyl)sulfoxonium, and finally the salts of polybasic amines such as N,N-bis-(3-aminopropyl)methylamine and diethylenetriamine.

Anions of useful acid addition salts are primarily chloride, bromide, fluoride, iodide, hydrogensulfate, methylsulfate, sulfate, dihydrogenphosphate, hydrogenphosphate, nitrate, bicarbonate, carbonate, hexafluorosilicate, hexafluorophosphate, benzoate and also the anions of C₁-C₄-alkanoic acids, preferably formate, acetate, propionate and butyrate.

In the methods according to the present invention, the required application rate of the pure active compounds, i.e. of herbicide A, depends on the density of the undesired vegetation, on the development stage of the plants, on the soil properties, on the climatic conditions of the location where the composition is used and on the application method.

In general, the application rate of herbicide A is from 0,5 to 500 g/ha, preferably from 0,5 to 250 g/ha, more preferably from 0,5 to 100 g/ha of active substance.

In a particular embodiment of the method according to present invention, the herbicide A is applied pre-emergence of the soy with an application rate of 0,5 to g/ha to 6,25 g/ha, preferably with an application rate of 0,5 to 5 g/ha.

The above-mentioned application rates of herbicide indicate the amount of active agent without auxiliaries such as carrier material or surfactants.

In the herbicidal mixture comprising as a component 1) a herbicide A selected from a compound of formula (I) and salts of the compound of formula (I) and as a component 2) at least one further compound selected from compounds B the relative proportions by weight of the components 1) : 2) are generally in the range of from 1:1000 to 1000:1, preferably in the range of from 1:500 to 500:1, in particular in the range of from 1:250 to 250:1 and particularly preferably in the range of from 1:75 to 75:1.

In one embodiment of the method according to present invention, the ratio of the herbicide A to herbicide B in the mixture is from 10:1 to 1:6000.

In one further embodiment of the method according to present invention, the ratio of the herbicide A to herbicide B in the mixture is from 1:1 to 1:2000.

Particularly preferred mixtures for the inventive use are listed below in table A:

**Table A**

| Mixture | | Component 1) | Component 2) |
|---|---|---|---|
| | A.1 | Compound I.a | cyhalofop-butyl |
| | A.2 | Compound I.a | profoxydim |
| | A.3 | Compound I.a | triallate |
| | A.4 | Compound I.a | pinoxaden |
| | A.5 | Compound I.a | bispyribac-sodium |
| | A.6 | Compound I.a | bensulfuron-methyl |
| | A.7 | Compound I.a | ethoxysulfuron |
| | A.8 | Compound I.a | imazapic |
| | A.9 | Compound I.a | imazapyr |
| | A.10 | Compound I.a | imazethapyr |
| | A.11 | Compound I.a | propyrisulfuron |
| | A.12 | Compound I.a | triafamone |
| | A.13 | Compound I.a | atrazine |
| | A.14 | Compound I.a | hexazinone |
| | A.15 | Compound I.a | metribuzin |
| | A.16 | Compound I.a | diuron |
| | A.17 | Compound I.a | bentazon |
| | A.18 | Compound I.a | bentazon-sodium |
| | A.19 | Compound I.a | epyrifenacil |
| | A.20 | Compound I.a | flumioxazin |
| | A.21 | Compound I.a | pyraclonil |
| | A.22 | Compound I.a | saflufenacil |
| | A.23 | Compound I.a | trifludimoxazin |
| | A.24 | Compound I.a | 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy] acetic acid ethyl ester |
| | A.25 | Compound I.a | beflubutamid |
| | A.26 | Compound I.a | bixlozone |
| | A.27 | Compound I.a | diflufenican |
| | A.28 | Compound I.a | fluridone |
| | A.29 | Compound I.a | flurochloridone |
| | A.30 | Compound I.a | flurtamone |
| | A.31 | Compound I.a | norflurazon |
| | A.32 | Compound I.a | picolinafen |
| | A.33 | Compound I.a | 4-(3-trifluoromethylphenoxy)-2-(4-trifluoromethylphenyl)-pyrimidine (CAS 180608-33-7) |
| | A.34 | Compound I.a | rimisoxafen |
| | A.35 | Compound I.a | benzobicyclon |
| | A.36 | Compound I.a | isoxaflutole |
| | A.37 | Compound I.a | mesotrione |
| | A.38 | Compound I.a | tembotrione |
| | A.39 | Compound I.a | tolpyralate |
| | A.40 | Compound I.a | topramezone |
| | A.41 | Compound I.a | glyphosate |
| | A.42 | Compound I.a | glyphosate-isopropylammonium |
| | A.43 | Compound I.a | glyposate-potassium |
| | A.44 | Compound I.a | glyphosate-trimesium (sulfosate) |
| | A.45 | Compound I.a | glufosinate, |
| | A.46 | Compound I.a | glufosinate-P |
| | A.47 | Compound I.a | glufosinate-ammonium |
| | A.48 | Compound I.a | glufosinate-P-ammonium |
| | A.49 | Compound I.a | pendimethalin |
| | A.50 | Compound I.a | trifluralin |
| | A.51 | Compound I.a | icafolin methyl |
| | A.52 | Compound I.a | butachlor |
| | A.53 | Compound I.a | dimethenamid-P |
| | A.54 | Compound I.a | metolachlor-S |
| | A.55 | Compound I.a | pretilachlor |
| | A.56 | Compound I.a | pyroxasulfone |
| | A.57 | Compound I.a | clacyfos |
| | A.58 | Compound I.a | 2,4-DB and its salts and esters |
| | A.59 | Compound I.a | dicamba and its salts and esters |
| | A.60 | Compound I.a | florpyrauxifen |
| | A.61 | Compound I.a | bromobutide |
| | A.62 | Compound I.a | chlorflurenol |
| | A.63 | Compound I.a | cinmethylin |
| | A.64 | Compound I.a | tetflupyrolimet |
| | A.65 | Compound I.a | pyribenzoxim |
| | A.66 | Compound I.b | cyhalofop-butyl |
| | A.67 | Compound I.b | profoxydim |
| | A.68 | Compound I.b | triallate |
| | A.69 | Compound I.b | pinoxaden |
| | A.70 | Compound I.b | bispyribac-sodium |
| | A.71 | Compound I.b | bensulfuron-methyl |
| | A.72 | Compound I.b | ethoxysulfuron |
| | A.73 | Compound I.b | imazapic |
| | A.74 | Compound I.b | imazapyr |
| | A.75 | Compound I.b | imazethapyr |
| | A.76 | Compound I.b | propyrisulfuron |
| | A.77 | Compound I.b | triafamone |
| | A.78 | Compound I.b | atrazine |
| | A.79 | Compound I.b | hexazinone |
| | A.80 | Compound I.b | metribuzin |
| | A.81 | Compound I.b | diuron |
| | A.82 | Compound I.b | bentazon |
| | A.83 | Compound I.b | bentazon-sodium |
| | A.84 | Compound I.b | epyrifenacil |
| | A.85 | Compound I.b | flumioxazin |
| | A.86 | Compound I.b | pyraclonil |
| | A.87 | Compound I.b | saflufenacil |
| | A.88 | Compound I.b | trifludimoxazin |
| | A.89 | Compound I.b | 2-[2-[[3-chloro-6-[3,6-dihydro-3-methyl-2,6-dioxo-4-(trifluoromethyl)-1 (2H)-pyrimidinyl]-5-fluoro-2-pyridinyl]oxy]phenoxy] acetic acid ethyl ester |
| | A.90 | Compound I.b | beflubutamid |
| | A.91 | Compound I.b | bixlozone |
| | A.92 | Compound I.b | diflufenican |
| | A.93 | Compound I.b | fluridone |
| | A.94 | Compound I.b | flurochloridone |
| | A.95 | Compound I.b | flurtamone |
| | A.96 | Compound I.b | norflurazon |
| | A.97 | Compound I.b | picolinafen |
| | A.98 | Compound I.b | 4-(3-trifluoromethylphenoxy)-2-(4-trifluoromethylphenyl)-pyrimidine (CAS 180608-33-7) |
| | A.99 | Compound I.b | rimisoxafen |
| | A.100 | Compound I.b | benzobicyclon |
| | A.101 | Compound I.b | isoxaflutole |
| | A.102 | Compound I.b | mesotrione |
| | A.103 | Compound I.b | tembotrione |
| | A.104 | Compound I.b | tolpyralate |
| | A.105 | Compound I.b | topramezone |
| | A.106 | Compound I.b | glyphosate |
| | A.107 | Compound I.b | glyphosate-isopropylammonium |
| | A.108 | Compound I.b | glyposate-potassium |
| | A.109 | Compound I.b | glyphosate-trimesium (sulfosate) |
| | A.110 | Compound I.b | glufosinate, |
| | A.111 | Compound I.b | glufosinate-P |
| | A.112 | Compound I.b | glufosinate-ammonium |
| | A.113 | Compound I.b | glufosinate-P-ammonium |
| | A.114 | Compound I.b | pendimethalin |
| | A.115 | Compound I.b | trifluralin |
| | A.116 | Compound I.b | icafolin methyl |
| | A.117 | Compound I.b | butachlor |
| | A.118 | Compound I.b | dimethenamid-P |
| | A.119 | Compound I.b | metolachlor-S |
| | A.120 | Compound I.b | pretilachlor |
| | A.121 | Compound I.b | pyroxasulfone |
| | A.122 | Compound I.b | clacyfos |
| | A.123 | Compound I.b | 2,4-DB and its salts and esters |
| | A.124 | Compound I.b | dicamba and its salts and esters |
| | A.125 | Compound I.b | florpyrauxifen |
| | A.126 | Compound I.b | bromobutide |
| | A.127 | Compound I.b | chlorflurenol |
| | A.128 | Compound I.b | cinmethylin |
| | A.129 | Compound I.b | tetflupyrolimet |
| | A.130 | Compound I.b | pyribenzoxim |
| | A.131 | Compound I.c | cyhalofop-butyl |
| | A.132 | Compound I.c | profoxydim |
| | A.133 | Compound I.c | triallate |
| | A.134 | Compound I.c | pinoxaden |
| | A.135 | Compound I.c | bispyribac-sodium |
| | A.136 | Compound I.c | bensulfuron-methyl |
| | A.137 | Compound I.c | ethoxysulfuron |
| | A.138 | Compound I.c | imazapic |
| | A.139 | Compound I.c | imazapyr |
| | A.140 | Compound I.c | imazethapyr |
| | A.141 | Compound I.c | propyrisulfuron |
| | A.142 | Compound I.c | triafamone |
| | A.143 | Compound I.c | atrazine |
| | A.144 | Compound I.c | hexazinone |
| | A.145 | Compound I.c | metribuzin |
| | A.146 | Compound I.c | diuron |
| | A.147 | Compound I.c | bentazon |
| | A.148 | Compound I.c | bentazon-sodium |
| | A.149 | Compound I.c | epyrifenacil |
| | A.150 | Compound I.c | flumioxazin |
| | A.151 | Compound I.c | pyraclonil |
| | A.152 | Compound I.c | saflufenacil |
| | A.153 | Compound I.c | trifludimoxazin |
| | A.154 | Compound I.c | 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy] acetic acid ethyl ester |
| | A.155 | Compound I.c | beflubutamid |
| | A.156 | Compound I.c | bixlozone |
| | A.157 | Compound I.c | diflufenican |
| | A.158 | Compound I.c | fluridone |
| | A.159 | Compound I.c | flurochloridone |
| | A.160 | Compound I.c | flurtamone |
| | A.161 | Compound I.c | norflurazon |
| | A.162 | Compound I.c | picolinafen |
| | A.163 | Compound I.c | 4-(3-trifluoromethylphenoxy)-2-(4-trifluoromethylphenyl)-pyrimidine (CAS 180608-33-7) |
| | A.164 | Compound I.c | rimisoxafen |
| | A.165 | Compound I.c | benzobicyclon |
| | A.166 | Compound I.c | isoxaflutole |
| | A.167 | Compound I.c | mesotrione |
| | A.168 | Compound I.c | tembotrione |
| | A.169 | Compound I.c | tolpyralate |
| | A.170 | Compound I.c | topramezone |
| | A.171 | Compound I.c | glyphosate |
| | A.172 | Compound I.c | glyphosate-isopropylammonium |
| | A.173 | Compound I.c | glyposate-potassium |
| | A.174 | Compound I.c | glyphosate-trimesium (sulfosate) |
| | A.175 | Compound I.c | glufosinate, |
| | A.176 | Compound I.c | glufosinate-P |
| | A.177 | Compound I.c | glufosinate-ammonium |
| | A.178 | Compound I.c | glufosinate-P-ammonium |
| | A.179 | Compound I.c | pendimethalin |
| | A.180 | Compound I.c | trifluralin |
| | A.181 | Compound I.c | icafolin methyl |
| | A.182 | Compound I.c | butachlor |
| | A.183 | Compound I.c | dimethenamid-P |
| | A.184 | Compound I.c | metolachlor-S |
| | A.185 | Compound I.c | pretilachlor |
| | A.186 | Compound I.c | pyroxasulfone |
| | A.187 | Compound I.c | clacyfos |
| | A.188 | Compound I.c | 2,4-DB and its salts and esters |
| | A.189 | Compound I.c | dicamba and its salts and esters |
| | A.190 | Compound I.c | florpyrauxifen |
| | A.191 | Compound I.c | bromobutide |
| | A.192 | Compound I.c | chlorflurenol |
| | A.193 | Compound I.c | cinmethylin |
| | A.194 | Compound I.c | tetflupyrolimet |
| | A.195 | Compound I.c | pyribenzoxim |
| | A.196 | Compound I.d | cyhalofop-butyl |
| | A.197 | Compound I.d | profoxydim |
| | A.198 | Compound I.d | triallate |
| | A.199 | Compound I.d | pinoxaden |
| | A.200 | Compound I.d | bispyribac-sodium |
| | A.201 | Compound I.d | bensulfuron-methyl |
| | A.202 | Compound I.d | ethoxysulfuron |
| | A.203 | Compound I.d | imazapic |
| | A.204 | Compound I.d | imazapyr |
| | A.205 | Compound I.d | imazethapyr |
| | A.206 | Compound I.d | propyrisulfuron |
| | A.207 | Compound I.d | triafamone |
| | A.208 | Compound I.d | atrazine |
| | A.209 | Compound I.d | hexazinone |
| | A.210 | Compound I.d | metribuzin |
| | A.211 | Compound I.d | diuron |
| | A.212 | Compound I.d | bentazon |
| | A.213 | Compound I.d | bentazon-sodium |
| | A.214 | Compound I.d | epyrifenacil |
| | A.215 | Compound I.d | flumioxazin |
| | A.216 | Compound I.d | pyraclonil |
| | A.217 | Compound I.d | saflufenacil |
| | A.218 | Compound I.d | trifludimoxazin |
| | A.219 | Compound I.d | 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy] acetic acid ethyl ester |
| | A.220 | Compound I.d | beflubutamid |
| | A.221 | Compound I.d | bixlozone |
| | A.222 | Compound I.d | diflufenican |
| | A.223 | Compound I.d | fluridone |
| | A.224 | Compound I.d | flurochloridone |
| | A.225 | Compound I.d | flurtamone |
| | A.226 | Compound I.d | norflurazon |
| | A.227 | Compound I.d | picolinafen |
| | A.228 | Compound I.d | 4-(3-trifluoromethylphenoxy)-2-(4-trifluoromethylphenyl)-pyrimidine (CAS 180608-33-7) |
| | A.229 | Compound I.d | rimisoxafen |
| | A.230 | Compound I.d | benzobicyclon |
| | A.231 | Compound I.d | isoxaflutole |
| | A.232 | Compound I.d | mesotrione |
| | A.233 | Compound I.d | tembotrione |
| | A.234 | Compound I.d | tolpyralate |
| | A.235 | Compound I.d | topramezone |
| | A.236 | Compound I.d | glufosinate, |
| | A.237 | Compound I.d | glyphosate |
| | A.238 | Compound I.d | glyphosate-isopropylammonium |
| | A.239 | Compound I.d | glyposate-potassium |
| | A.240 | Compound I.d | glyphosate-trimesium (sulfosate) |
| | A.241 | Compound I.d | glufosinate-P |
| | A.242 | Compound I.d | glufosinate-ammonium |
| | A.243 | Compound I.d | glufosinate-P-ammonium |
| | A.244 | Compound I.d | pendimethalin |
| | A.245 | Compound I.d | trifluralin |
| | A.246 | Compound I.d | icafolin methyl |
| | A.247 | Compound I.d | butachlor |
| | A.248 | Compound I.d | dimethenamid-P |
| | A.249 | Compound I.d | metolachlor-S |
| | A.250 | Compound I.d | pretilachlor |
| | A.251 | Compound I.d | pyroxasulfone |
| | A.252 | Compound I.d | clacyfos |
| | A.253 | Compound I.d | 2,4-DB and its salts and esters |
| | A.254 | Compound I.d | dicamba and its salts and esters |
| | A.255 | Compound I.d | florpyrauxifen |
| | A.256 | Compound I.d | bromobutide |
| | A.257 | Compound I.d | chlorflurenol |
| | A.258 | Compound I.d | cinmethylin |
| | A.259 | Compound I.d | tetflupyrolimet |
| | A.260 | Compound I.d | pyribenzoxim |

Particularly preferred mixtures for the inventive use are listed below in table B:

**Table B**

| Mixture | | Component 1) | Component 2) | Ratio | Preferred ratio |
|---|---|---|---|---|---|
| | B.1 | Compound I.a | 2-[2-[[3-chloro-6-[3,6-dihydro-3-methyl-2,6-dioxo-4-(trifluoromethyl)-1 (2H)-pyrimidinyl]-5-fluoro-2-pyridinyl]oxy]phenoxy] acetic acid ethyl ester | 10:1 - 1:200 | 1:1 - 1:100 |
| | B.2 | Compound I.a | dicamba (different salts) | 1:5 - 1:1200 | 1:20 - 1:1000 |
| | B.3 | Compound I.a | dimethenamid-p | 1:25 - 1:4000 | 1:80 - 1:2000 |
| | B.4 | Compound I.a | epyrifenacil | 10:1 - 1:200 | 1:1 - 1:100 |
| | B.5 | Compound I.a | flumioxazin | 2:1 - 1:400 | 1:2 - 1:300 |
| | B.6 | Compound I.a | glufosinate-ammonium racemic | 1:20 - 1:4000 | 1:60 - 1:3000 |
| | B.7 | Compound I.a | glufosinate-ammonium-L | 1:10 - 1:2000 | 1:30 - 1:1500 |
| | B.8 | Compound I.a | glyphosate | 1:50 - 1:4000 | 1:100 - 1:3000 |
| | B.9 | Compound I.a | icafolin-methyl | 10:1 - 1:200 | 1:1 - 1:100 |
| | B.10 | Compound I.a | imazethapyr | 1:1 - 1:600 | 1:6 - 1:400 |
| | B.11 | Compound I.a | isoxaflutole | 1:2 - 1:500 | 1:10 - 1:300 |
| | B.12 | Compound I.a | metribuzin | 1:10 - 1:6000 | 1:40 - 1:3000 |
| | B.13 | Compound I.a | pyroxasulfone | 1:1 - 1:600 | 1:16 - 1:400 |
| | B.14 | Compound I.a | saflufenacil encapsulated formulation | 2:1 - 1:400 | 1:2 - 1:160 |
| | B.15 | Compound I.a | saflufenacil normal | 2:1 - 1:400 | 1:2 - 1:160 |
| | B.16 | Compound I.a | trifludimoxazin | 5:1 - 1:400 | 1:1 - 1:100 |
| | B.17 | Compound I.b | 2-[2-[[3-chloro-6-[3,6-dihydro-3-methyl-2,6-dioxo-4-(trifluoromethyl)-1 (2H)-pyrimidinyl]-5-fluoro-2-pyridinyl]oxy]phenoxy] acetic acid ethyl ester | 10:1 - 1:200 | 1:1 - 1:100 |
| | B.18 | Compound I.b | dicamba (different salts) | 1:5 - 1:1200 | 1:20 - 1:1000 |
| | B.19 | Compound I.b | dimethenamid-p | 1:25 - 1:4000 | 1:80 - 1:2000 |
| | B.20 | Compound I.b | epyrifenacil | 10:1 - 1:200 | 1:1 - 1:100 |
| | B.21 | Compound I.b | flumioxazin | 2:1 - 1:400 | 1:2 - 1:300 |
| | B.22 | Compound I.b | glufosinate-ammonium racemic | 1:20 - 1:4000 | 1:60 - 1:3000 |
| | B.23 | Compound I.b | glufosinate-ammonium-L | 1:10 - 1:2000 | 1:30 - 1:1500 |
| | B.24 | Compound I.b | glyphosate | 1:50 - 1:4000 | 1:100 - 1:3000 |
| | B.25 | Compound I.b | icafolin-methyl | 10:1 - 1:200 | 1:1 - 1:100 |
| | B.26 | Compound I.b | imazethapyr | 1:1 - 1:600 | 1:6 - 1:400 |
| | B.27 | Compound I.b | isoxaflutole | 1:2 - 1:500 | 1:10 - 1:300 |
| | B.28 | Compound I.b | metribuzin | 1:10 - 1:6000 | 1:40 - 1:3000 |
| | B.29 | Compound I.b | pyroxasulfone | 1:1 - 1:600 | 1:16 - 1:400 |
| | B.30 | Compound I.b | saflufenacil encapsulated formulation | 2:1 - 1:400 | 1:2 - 1:160 |
| | B.31 | Compound I.b | saflufenacil normal | 2:1 - 1:400 | 1:2 - 1:160 |
| | B.32 | Compound I.b | trifludimoxazin | 5:1 - 1:400 | 1:1 - 1:100 |
| | B.33 | Compound I.c | 2-[2-[[3-chloro-6-[3,6-dihydro-3-methyl-2,6-dioxo-4-(trifluoromethyl)-1 (2H)-pyrimidinyl]-5-fluoro-2-pyridinyl]oxy]phenoxy] acetic acid ethyl ester | 10:1 - 1:200 | 1:1 - 1:100 |
| | B.34 | Compound I.c | dicamba (different salts) | 1:5 - 1:1200 | 1:20 - 1:1000 |
| | B.35 | Compound I.c | dimethenamid-p | 1:25 - 1:4000 | 1:80 - 1:2000 |
| | B.36 | Compound I.c | epyrifenacil | 10:1 - 1:200 | 1:1 - 1:100 |
| | B.37 | Compound I.c | flumioxazin | 2:1 - 1:400 | 1:2 - 1:300 |
| | B.38 | Compound I.c | glufosinate-ammonium racemic | 1:20 - 1:4000 | 1:60 - 1:3000 |
| | B.39 | Compound I.c | glufosinate-ammonium-L | 1:10 - 1:2000 | 1:30 - 1:1500 |
| | B.40 | Compound I.c | glyphosate | 1:50 - 1:4000 | 1:100 - 1:3000 |
| | B.41 | Compound I.c | icafolin-methyl | 10:1 - 1:200 | 1:1 - 1:100 |
| | B.42 | Compound I.c | imazethapyr | 1:1 - 1:600 | 1:6 - 1:400 |
| | B.43 | Compound I.c | isoxaflutole | 1:2 - 1:500 | 1:10 - 1:300 |
| | B.44 | Compound I.c | metribuzin | 1:10 - 1:6000 | 1:40 - 1:3000 |
| | B.45 | Compound I.c | pyroxasulfone | 1:1 - 1:600 | 1:16 - 1:400 |
| | B.46 | Compound I.c | saflufenacil encapsulated formulation | 2:1 - 1:400 | 1:2 - 1:160 |
| | B.47 | Compound I.c | saflufenacil normal | 2:1 - 1:400 | 1:2 - 1:160 |
| | B.48 | Compound I.c | trifludimoxazin | 5:1 - 1:400 | 1:1 - 1:100 |
| | B.49 | Compound I.d | 2-[2-[[3-chloro-6-[3,6-dihydro-3-methyl-2,6-dioxo-4-(trifluoromethyl)-1 (2H)-pyrimidinyl]-5-fluoro-2-pyridinyl]oxy]phenoxy] acetic acid ethyl ester | 10:1 - 1:200 | 1:1 - 1:100 |
| | B.50 | Compound I.d | dicamba (different salts) | 1:5 - 1:1200 | 1:20 - 1:1000 |
| | B.51 | Compound I.d | dimethenamid-p | 1:25 - 1:4000 | 1:80 - 1:2000 |
| | B.52 | Compound I.d | epyrifenacil | 10:1 - 1:200 | 1:1 - 1:100 |
| | B.53 | Compound I.d | flumioxazin | 2:1 - 1:400 | 1:2 - 1:300 |
| | B.54 | Compound I.d | glufosinate-ammonium racemic | 1:20 - 1:4000 | 1:60 - 1:3000 |
| | B.55 | Compound I.d | glufosinate-ammonium-L | 1:10 - 1:2000 | 1:30 - 1:1500 |
| | B.56 | Compound I.d | glyphosate | 1:50 - 1:4000 | 1:100 - 1:3000 |
| | B.57 | Compound I.d | icafolin-methyl | 10:1 - 1:200 | 1:1 - 1:100 |
| | B.58 | Compound I.d | imazethapyr | 1:1 - 1:600 | 1:6 - 1:400 |
| | B.59 | Compound I.d | isoxaflutole | 1:2 - 1:500 | 1:10 - 1:300 |
| | B.60 | Compound I.d | metribuzin | 1:10 - 1:6000 | 1:40 - 1:3000 |
| | B.61 | Compound I.d | pyroxasulfone | 1:1 - 1:600 | 1:16 - 1:400 |
| | B.62 | Compound I.d | saflufenacil encapsulated formulation | 2:1 - 1:400 | 1:2- 1:160 |
| | B.63 | Compound I.d | saflufenacil normal | 2:1 - 1:400 | 1:2 - 1:160 |
| | B.64 | Compound I.d | trifludimoxazin | 5:1 - 1:400 | 1:1 - 1:100 |

In another embodiment of the present invention the compositions according to the present invention comprise optionally at least one safener S.

According to another preferred embodiment of the invention, the composition comprises optionally, in addition to the component 1), component 2) and component 3) at least one and especially exactly one safener S, in particular selected from the group consisting of benoxacor, cloquintocet, cyprosulfamide, dichlormid, fenchlorazole, fenclorim, furilazole, isoxadifen, mefenpyr, 4-(dichloroacetyl)-1-oxa-4-azaspiro[4.5]decane (MON4660, CAS 71526-07-3) and 2,2,5-trimethyl-3-(dichloroacetyl)-1,3-oxazolidine (R-29148, CAS 52836-31-4).

Safeners are chemical compounds which prevent or reduce damage on useful plants without having a major impact on the herbicidal action of the herbicidal active components of the present compositions towards unwanted plants. They can be applied either before sowings (e.g. on seed treatments, shoots or seedlings) or in the pre-emergence application or post-emergence application of the useful plant.

Suitable safeners are e.g. (quinolin-8-oxy)acetic acids, 1-phenyl-5-haloalkyl-1H-1,2,4-triazol-3-carboxylic acids, 1-phenyl-4,5-dihydro-5-alkyl-1H-pyrazol-3,5-dicarboxylic acids, 4,5-dihydro-5,5-diaryl-3-isoxazol carboxylic acids, dichloroacetamides, alpha-oximinophenylacetonitriles, acetophenonoximes, 4,6-dihalo-2-phenylpyrimidines, N-[[4-(aminocarbonyl)phenyl]sulfonyl]-2-benzoic amides, 1,8-naphthalic anhydride, 2-halo-4-(haloalkyl)-5-thiazol carboxylic acids, phosphorthiolates and N-alkyl-O-phenylcarbamates and their agriculturally acceptable salts and their agriculturally acceptable derivatives such amides, esters, and thioesters, provided they have an acid group.

Examples of preferred safeners S are benoxacor, cloquintocet, cyometrinil, cyprosulfamide, dichlormid, dicyclonon, dietholate, fenchlorazole, fenclorim, flurazole, fluxofenim, furilazole, isoxadifen, mefenpyr, mephenate, naphthalic anhydride, oxabetrinil, 4-(dichloroacetyl)-1-oxa-4-azaspiro[4.5]decane (MON4660, CAS 71526-07-3), 2,2,5-trimethyl-3-(dichloroacetyl)-1,3-oxa-zolidine (R-29148, CAS 52836-31-4), metcamifen and BPCMS (CAS 54091-06-4).

Especially preferred safeners S are benoxacor, cloquintocet, cyprosulfamide, dichlormid, fenchlorazole, fenclorim, flurazole, fluxofenim, furilazole, isoxadifen, mefenpyr, naphthalic anhydride, oxabetrinil, 4-(dichloroacetyl)-1-oxa-4-azaspiro[4.5]decane (MON4660, CAS 71526-07-3), 2,2,5-trimethyl-3-(dichloroacetyl)-1,3-oxazolidine (R-29148, CAS 52836-31-4) and metcamifen. Particularly preferred safeners S are cloquintocet, cyprosulfamide, fenclorim, furilazole, isoxadifen-ethyl, mefenpyr-diethyl.

Particularly preferred safeners S, which, as component S, are constituent of the composition according to the invention are the safeners S as defined above; in particular the safeners S.1 - S.17 listed below in table C:

**Table S**

| | Safener C |
|---|---|
| S.1 | benoxacor |
| S.2 | cloquintocet |
| S.3 | cloquintocet-mexyl |
| S.4 | cyprosulfamide |
| S.5 | dichlormid |
| S.6 | fenchlorazole |
| S.7 | fenchlorazole-ethyl |
| S.8 | fenclorim |
| S.9 | furilazole |
| S.10 | isoxadifen |
| S.11 | isoxadifen-ethyl |
| S.12 | mefenpyr |
| S.13 | mefenpyr-diethyl |
| S.14 | naphtalic acid anhydride |
| S.15 | 4-(dichloroacetyl)-1-oxa-4-azaspiro[4.5]decane (MON4660, CAS 71526-07-3) |
| S.16 | 2,2,5-trimethyl-3-(dichloroacetyl)-1,3-oxazolidine (R-29148, CAS 52836-31-4) |
| S.17 | metcamifen |

In ternary compositions comprising at least one a component 1) a component 2) and one safener S, the relative proportions by weight of the components 1) : 2) are generally in the range of from 1:1000 to 1000:1, preferably in the range of from 1:500 to 500:1, in particular in the range of from 1:250 to 250:1 and particularly preferably in the range of from 1:75 to 75:1, the weight ratio of the components 1) : S) is generally in the range of from 1:1000 to 1000:1, preferably in the range of from 1:500 to 500:1, in particular in the range of from 1:250 to 250:1 and particularly preferably in the range of from 1:75 to 75:1, and the weight ratio of the components 2) : S) is generally in the range of from 1:1000 to 1000:1, preferably in the range of from 1:500 to 500:1, in particular in the range of from 1:250 to 250:1 and particularly preferably in the range of from 1:75 to 75:1. The weight ratio of components 1) + 2) to safener S) is preferably in the range of from 1:500 to 500:1, in particular in the range of from 1:250 to 250:1 and particularly preferably in the range of from 1:75 to 75:1.

The method or the use of the present invention is particularly suitable for selectively controlling *weeds,* wherein the herbicide A is applied to an area of a field where weeds grow or may grow and a culture of soy will be planted or is already planted.

In a preferred embodiment of the method or the use of the present invention, the herbicidal mixture is applied to an area, where a soy was planted.

If not stated otherwise, the herbicidal mixture is suitable for application in any variety of soy as outlined herein, no matter of genetic background, hybrid, breeding technique.

In a preferred embodiment of the method according to present invention, an effective amount of the herbicidal mixture is applied to the crop cultivation area, where soy was planted.

In a further preferred embodiment of the method according to present invention, an effective amount of the herbicidal mixture comprising compound (I.a) is applied to the crop cultivation area, where soy was planted.

In a further preferred embodiment of the method according to present invention, an effective amount of the herbicidal mixture comprising compound (I.b) is applied to the crop cultivation area, where soy was planted.

In a further preferred embodiment of the method according to present invention, an effective amount of the herbicidal mixture comprising compound (I.c) is applied to the crop cultivation area, where soy was planted.

In a further preferred embodiment of the method according to present invention, an effective amount of the herbicidal mixture comprising compound (I.d) is applied to the crop cultivation area, where soy was planted.

The method according to the present invention is useful for controlling a large variety of harmful plants (undesired vegetation), including monocotyledonous weeds and dicotyledonous weeds, in particular, for controlling weeds, which are selected from the genera Abutilon, Alisma, Alopecurus, Amaranthus, Ambrosia, Ammania, Ammi, Aneilema, Anthemis, Apera, Atriplex, Avena, Barbarea, Bidens, Brassica, Bromus, Bunias, Butomus, Capsella, Centaurea, Chenopodium, Cirsium, Conium, Convolvolus, Cyperus, Datura, Daucus, Descurainia, Digitaria, Echinochloa, Eleocharis, Eleusine, Euphorbia, Fimbristylis, Fumaria, Galinsoga, Galium, Geranium, Heliotropium, Heteranthera, Hibiscus, Ipomea, Kochia, Lamium, Leptochloa, Leersia, Limnocharis, Lolium, Ludwigia, Lycopsis, Matricaria, Mercurialis, Monochoria, Orobanche, Panicum, Papaver, Poa, Polygonum, Portulaca, Raphanus, Sagittaria, Scirpus, Sesbania, Setaria, Sinapis, Sphenoclea, Sonchus, Sisymbrium, Stachys, Stellaria, Thlaspi, Veronica, Viola and Xanthium. According to one embodiment of the present invention, weeds including but not limited to the following species are selectively controlled: *Abutilon theophrasti, Agropyron repens, Alopecurus myosuroides, Amaranthus hybridus, Amaranthus palmeri, Amaranthus retroflexus, Ambrosia artemisiifolia, Ambrosia trifida, Anagallis arvensis, Anchusa officinalis, Artemisia vulgaris, Atriplex patula, Bidens pilosa, Brachiaria decumbens, Brachiaria platyphylla, Calystegia sepium, Capsella bursa-pastoris, Cenchrus echinatus, Chenopodium album, Chenopodium ficifolium, Chenopodium hybridum, Cirsium arvense, Convolvulus arvensis, Conyza bonariensis, Conyza canadensis, Cynodon dactylon, Cyperus esculentus, Datura stramonium, Digitaria sanguinalis, Echinochloa colonum, Echinochloa crus-galli, Equisetum arvensis, Euphorbia heterophylla,* Ga*linsoga ciliata, Galinsoga parviflora, Galium aparine, Geranium dissectum, Ipomoea hederacea, Ipomoea purpurea, Iva xanthiifolia, Kochia scoparia, Lamium amplexicaule, Lamium purpureum, Matricaria inodora, Panicum dichotomiflorum, Pennisetum glaucum, Phalaris paradoxa,* Poa *annua, Polygonum aviculare, Polygonum convolvulus, Polygonum lapathifolium, Polygonum persicaria, Raphanus raphanistrum, Setaria faberi, Setaria glauca, Setaria verticillata, Setaria viridis, Sinapis arvensis, Solanum nigrum, Sonchus arvensis, Sorghum bicolor, Sorghum halepense, Stachys annua, Stellaria media, Symphytum officinale, Thlaspi arvense, Veronica hederifolia, Veronica persica, Viola arvensis, Xanthium strumarium.*

According to a embodiment of the present invention weeds including but not limited to the following monocotyledonous species are selectively controlled: *Cenchrus pauciflorus, Chloris virgata, Commelina erecta, Cynodon dactylon, Cyperus spp, Echinocloa colonum, Sorghum halepense, Trichloris crinita, Digitaria insularis, Urochloa or Brachiaria decumbens, Cenchrus echinatus, Commelina benghalensis, Avena strigosa, Pennisetum americanum, Panicum maximum, Echinochloa crus-galli, Urochloa or Brachiaria platyphylla, Digitaria spp, Panicum spp,, Setaria faberi, Eleusine indica, Sorghum halepense, Lolium multiflorum, Lolium spp, Urochloa or Brachiaria spp, Cynodon dactylon, Dactyloctenium aegyptium, Digitaria sanguinalis, Setaria viridis, Commelina communis, Rottboellia cochinchinensis, Setaria spp., Agropyron or Elymus repens, Digitaria horizontalis, Urochloa or Brachiaria plantaginea, Leptochloa filiformis, Leptochloa, Echinochloa spp., Urochloa or Brachiaria spp., Echinochloa colona, Setaria verticillata.*

According to a preferred embodiment of the present invention weeds including but not limited to the following dicotyledonous species are selectively controlled: *Aeschynomene denticulate, Abutilon theophrasti, Amaranthus palmeri, Amaranthus retroflexus, Amaranthus tuberculatus, Amaranthus viridis Ambrosia artemisiifolia, Arctotheca calendula, Capsella bursa-pastoris, Chenopodium album, Euphorbia heterophylla, Fallopia convolvulus, Galinsoga parviflora, Ipo*moea *hederacea, Kochia scoparia, Matricaria inodora, Mercurialis annua, Monochoria vaginalis, Papaver rhoeas, Portulaca oleracea, Rapistrum rugosum, Sinapis alba, Spermacoce verticillate, Sphenoclea zeylanica, Stellaria media, Veronica hederifolia.*

The compositions comprising herbicide (A) can generally be applied to weeds at any growth stage with good results. In one embodiment, the compositions comprising herbicide (A) are applied up to growth stage 37 of the weeds, showing effective weed control. In a preferred embodiment, the compositions comprising herbicide (A) are applied up to growth stage 32 of the weeds, showing effective weed control.

In the method according to the present invention for selectively controlling weeds in soy, the compositions comprising herbicide (A) can generally be applied pre-emergence and post-emergence of the crop, up to growth stage 37 of the crop.

In a preferred embodiment, the composition comprising herbicide (A) is applied pre-emergence of the crop.

Compositions of the herbicide A can be applied in conventional manner by using techniques a skilled person is familiar with. Suitable techniques include spraying, atomizing, dusting, spreading or watering. The type of application depends on the intended purpose in a well-known manner; in any case, it should ensure the finest possible distribution of the active ingredients.

Compositions of the herbicide A are applied to an area mainly by spraying, in particular foliar spraying of an aqueous dilution of the active ingredient of the composition. Application can be carried out by customary spraying techniques using, for example, water as carrier and spray liquor rates of from about 10 to 2000 l/ha or 50 to 1000 l/ha, for example from 100 to 500 l/ha. Application of the compositions of the herbicide A by the low-volume and the ultra-low-volume method is possible, as is their application in the form of microgranules.

If the active ingredient is less well tolerated by certain crop plants, application techniques may be used in which the compositions of the herbicide A is sprayed, with the aid of the spray apparatus, in such a way that they come into as little contact, if any, as possible with the leaves of the sensitive crop plants while reaching the leaves of undesirable plants which grow underneath, or the bare soil (post-directed, lay-by).

Another technique under preemergence / pre-plant conditions providing additional selectivity could be gained by applying active ingredient first and then with any tillage, planting or other technique move upper treated soil layer out of seed row into inter-row area.

When the compositions of the herbicide A is used in burndown programs, it can be applied prior to seeding (planting) or after seeding (or planting) of the crop plants but before the emergence of the crop plants.

The agrochemical compositions of herbicide A, formulations of herbicide A, contain, besides the active ingredient or the composition, at least one organic or inorganic carrier material. The formulations may also contain, if desired, one or more surfactants and, if desired, one or more further auxiliaries customary for crop protection compositions.

In the formulations, the active ingredients and optional further actives are present in suspended, emulsified or dissolved form. The formulation can be in the form of aqueous solutions, powders, suspensions, also highly-concentrated aqueous, oily or other suspensions or dispersions, aqueous emulsions, aqueous microemulsions, aqueous suspo-emulsions, oil dispersions, pastes, dusts, materials for spreading or granules.

Depending on the formulation type, they comprise one or more liquid or solid carriers, if appropriate surfactants (such as dispersants, protective colloids, emulsifiers, wetting agents and tackifiers), and if appropriate further auxiliaries which are customary for formulating crop protection products. The person skilled in the art is sufficiently familiar with the recipes for such formulations. Further auxiliaries include e.g. organic and inorganic thickeners, bactericides, antifreeze agents, antifoams, colorants and, for seed formulations, adhesives.

Suitable carriers include liquid and solid carriers. Liquid carriers include e.g. non-aqueous solvents such as cyclic and aromatic hydrocarbons, e.g. paraffins, tetrahydronaphthalene, alkylated naphthalenes and their derivatives, alkylated benzenes and their derivatives, alcohols such as methanol, ethanol, propanol, butanol and cyclohexanol, ketones such as cyclohexanone, strongly polar solvents, e.g. amines such as N-methylpyrrolidone, and water as well as mixtures thereof. Solid carriers include e.g. mineral earths such as silicas, silica gels, silicates, talc, kaolin, limestone, lime, chalk, bole, loess, clay, dolomite, diatomaceous earth, calcium sulfate, magnesium sulfate, magnesium oxide, ground synthetic materials, fertilizers such as ammonium sulfate, ammonium phosphate, ammonium nitrate, ureas, and products of vegetable origin such as cereal meal, tree bark meal, wood meal and nutshell meal, cellulose powders, or other solid carriers.

Suitable surfactants (adjuvants, wetting agents, tackifiers, dispersants and also emulsifiers) are the alkali metal salts, alkaline earth metal salts and ammonium salts of aromatic sulfonic acids, for example lignosulfonic acids (e.g. Borrespers-types, Borregaard), phenolsulfonic acids, naphthalenesulfonic acids (Morwet types, Akzo Nobel) and dibutylnaphthalenesulfonic acid (Nekal types, BASF AG), and of fatty acids, alkyl- and alkylarylsulfonates, alkyl sulfates, lauryl ether sulfates and fatty alcohol sulfates, and salts of sulfated hexa-, hepta- and octadecanols, and also of fatty alcohol glycol ethers, condensates of sulfonated naphthalene and its derivatives with formaldehyde, condensates of naphthalene or of the naphthalenesulfonic acids with phenol and formaldehyde, polyoxyethylene octylphenol ether, ethoxylated isooctyl-, octyl- or nonylphenol, alkylphenyl or tributylphenyl polyglycol ether, alkylaryl polyether alcohols, isotridecyl alcohol, fatty alcohol/ethylene oxide condensates, ethoxylated castor oil, polyoxyethylene alkyl ethers or polyoxypropylene alkyl ethers, lauryl alcohol polyglycol ether acetate, sorbitol esters, lignosulfite waste liquors and proteins, denaturated proteins, polysaccharides (e.g. methylcellulose), hydrophobically modified starches, polyvinyl alcohol (Mowiol types Clariant), polycarboxylates (BASF AG, Sokalan types), polyalkoxylates, polyvinylamine (BASF AG, Lupamine types), polyethyleneimine (BASF AG, Lupasol types), polyvinylpyrrolidone and copolymers thereof.

Examples of thickeners (i.e. compounds which impart to the formulation modified flow properties, i.e. high viscosity in the state of rest and low viscosity in motion) are polysaccharides, such as xanthan gum (Kelzan^{®} from Kelco), Rhodopol^{®} 23 (Rhone Poulenc) or Veegum^{®} (from R.T. Vanderbilt), and also organic and inorganic sheet minerals, such as Attaclay^{®} (from Engelhardt).

Examples of antifoams are silicone emulsions (such as, for example, Silikon^{®} SRE, Wacker or Rhodorsil^{®} from Rhodia), long-chain alcohols, fatty acids, salts of fatty acids, organofluorine compounds and mixtures thereof.

Bactericides can be added for stabilizing the aqueous herbicidal formulations. Examples of bactericides are bactericides based on diclorophen and benzyl alcohol hemiformal (Proxel^{®} from ICI or Acticide^{®} RS from Thor Chemie and Kathon^{®} MK from Rohm & Haas), and also isothiazolinone derivates, such as alkylisothiazolinones and benzisothiazolinones (Acticide MBS from Thor Chemie).

Examples of antifreeze agents are ethylene glycol, propylene glycol, urea or glycerol.

Examples of colorants are both sparingly water-soluble pigments and water-soluble dyes. Examples which may be mentioned are the dyes known under the names Rhodamin B, C.I. Pigment Red 112 and C.I. Solvent Red 1, and also pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108.

Examples of adhesives are polyvinylpyrrolidone, polyvinyl acetate, polyvinyl alcohol and tylose.

To prepare emulsions, pastes or oil dispersions, the active components, as such or dissolved in an oil or solvent, can be homogenized in water by means of wetting agent, tackifier, dispersant or emulsifier. Alternatively, it is possible to prepare concentrates consisting of active substance, wetting agent, tackifier, dispersant or emulsifier and, if desired, solvent or oil, and these concentrates are suitable for dilution with water.

Powders, materials for spreading and dusts can be prepared by mixing or concomitant grinding of the active the herbicides A and B with a solid carrier.

Granules, e.g. coated granules, impregnated granules and homogeneous granules, can be prepared by binding the active ingredients to solid carriers.

It may be beneficial to apply the herbicide A alone or in combination with other herbicides, or else in the form of a mixture with other crop protection agents, for example together with agents for controlling pests or phytopathogenic fungi or bacteria. Also of interest is the miscibility with mineral salt solutions, which are employed for treating nutritional and trace element deficiencies. Other additives such as non-phytotoxic oils and oil concentrates may also be added.

The formulations comprise a herbicidally effective amount of the herbicide A. The concentrations of the active ingredients in the formulations can be varied within wide ranges. In general, the formulations comprise from 1 to 98% by weight, preferably 10 to 60 % by weight, of active ingredients (herbicide A, and optionally further actives). The active ingredients are employed in a purity of from 90% to 100%, preferably 95% to 100% (according to NMR spectrum).

The herbicide A, i.e. active compound or composition, can, for example, be formulated as follows:

### Products for dilution with water

### A Water-soluble concentrates

10 parts by weight of active compound (or composition) are dissolved in 90 parts by weight of water or a water-soluble solvent. As an alternative, wetters or other adjuvants are added. The active compound dissolves upon dilution with water. This gives a formulation with an active compound content of 10% by weight.

### B Dispersible concentrates

20 parts by weight of active compound (or composition) are dissolved in 70 parts by weight of cyclohexanone with addition of 10 parts by weight of a dispersant, for example polyvinylpyrrolidone. Dilution with water gives a dispersion. The active compound content is 20% by weight.

### C Emulsifiable concentrates

15 parts by weight of active compound (or composition) are dissolved in 75 parts by weight of an organic solvent (e.g. alkylaromatics) with addition of calcium dodecylbenzenesulfonate and castor oil ethoxylate (in each case 5 parts by weight). Dilution with water gives an emulsion. The formulation has an active compound content of 15% by weight.

### D Emulsions

25 parts by weight of active compound (or composition) are dissolved in 35 parts by weight of an organic solvent (e.g. alkylaromatics) with addition of calcium dodecylbenzenesulfonate and castor oil ethoxylate (in each case 5 parts by weight). This mixture is introduced into 30 parts by weight of water by means of an emulsifier (Ultraturrax) and made into a homogeneous emulsion. Dilution with water gives an emulsion. The formulation has an active compound content of 25% by weight.

### E Suspensions

In an agitated ball mill, 20 parts by weight of active compound (or composition) are comminuted with addition of 10 parts by weight of dispersants and wetters and 70 parts by weight of water or an organic solvent to give a fine active compound suspension. Dilution with water gives a stable suspension of the active compound. The active compound content in the formulation is 20% by weight.

### F Water-dispersible granules and water-soluble granules

50 parts by weight of active compound (or composition) are ground finely with addition of 50 parts by weight of dispersants and wetters and made into water-dispersible or water-soluble granules by means of technical appliances (for example extrusion, spray tower, fluidized bed). Dilution with water gives a stable dispersion or solution of the active compound. The formulation has an active compound content of 50% by weight.

### G Water-dispersible powders and water-soluble powders

75 parts by weight of active compound (or composition) are ground in a rotor-stator mill with addition of 25 parts by weight of dispersants, wetters and silica gel. Dilution with water gives a stable dispersion or solution of the active compound. The active compound content of the formulation is 75% by weight.

### H Gel formulations

In a ball mill, 20 parts by weight of active compound (or composition), 10 parts by weight of dispersant, 1 part by weight of gelling agent and 70 parts by weight of water or of an organic solvent are mixed to give a fine suspension. Dilution with water gives a stable suspension with active compound content of 20% by weight.

Aqueous use forms can be prepared from emulsion concentrates, suspensions, pastes, wettable powders or water-dispersible granules by adding water.

### Use Examples

### Biological examples

The herbicidal activity of the compounds of formula (I) was demonstrated by the following greenhouse or field experiments:

### Greenhouse experiments:

The culture containers used were plastic flowerpots containing loamy sand with approximately 3.0% of organic matter as the substrate. The seeds of the test plants were sown separately for each species.

For the pre-emergence treatment, the active ingredients, which had been suspended or emulsified in water, were applied directly after sowing by means of finely distributing nozzles. The containers were irrigated gently to promote germination and growth and subsequently covered with transparent plastic hoods until the test plants had rooted. This cover caused uniform germination of the test plants, unless this had been impaired by the active ingredients.

For the post-emergence treatment, the test plants were first grown to a height of 3 to 20 cm, depending on the plant habit, and only then treated with the active ingredients which had been suspended or emulsified in water. For this purpose, the test plants were either sown directly and grown in the same containers, or they were first grown separately as seedlings and transplanted into the test containers a few days prior to treatment.

Depending on the species, the test plants were kept at 10 -25°C or 20 - 35°C, respectively. The test period extended over 2 to 4 weeks. During this time, the test plants were tended, and their response to the individual treatments was evaluated.

Evaluation was carried out using a scale from 0 to 100. 100 means no emergence of the test plants, or complete destruction of at least the aerial moieties, and 0 means no damage, or normal course of growth. A good herbicidal activity is given at values of 70 to < 90 and a very good herbicidal activity is given at values of 90 to 100.

### Field experiments

On field test sites, for the pre-emergence timing an area of the field was treated shortly before or after sowing of the crop but before emergence of the crop or weeds. For the post-emergence timing, crop and weed plants were treated at indicated growth stage. Therefore the active ingredient in its indicated formulation was suspended or emulsified in water and applied at respective timing by means of finely distributing nozzles.

Evaluation was carried out using a scale from 0 to 100. 100 means no emergence of the test plants, or complete destruction of at least the aerial moieties, and 0 means no damage, or normal course of growth. A good herbicidal activity is given at values of 70 to < 90 and a very good herbicidal activity is given at values of 90 to 100.

The following active compounds have been tested:

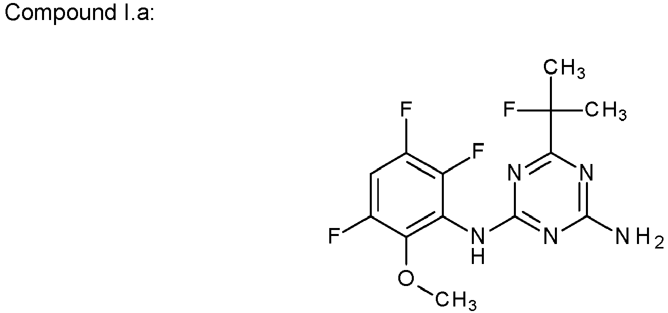

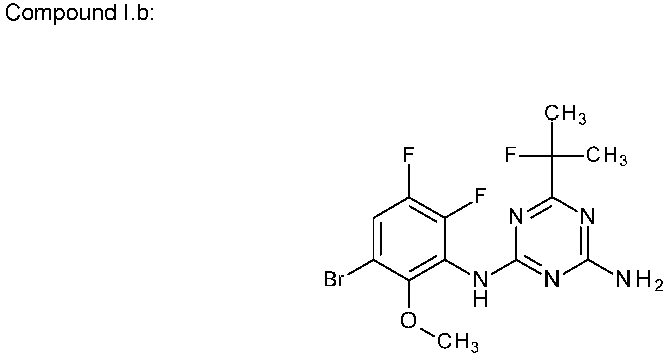

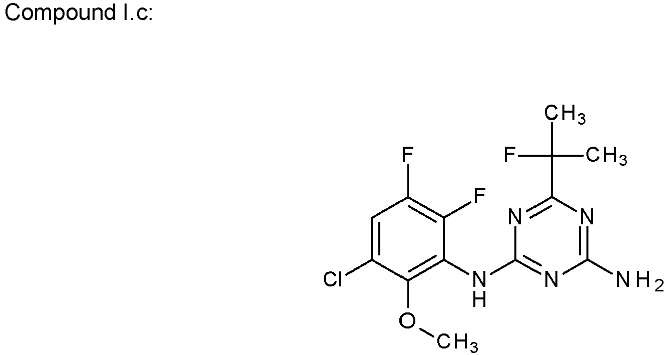

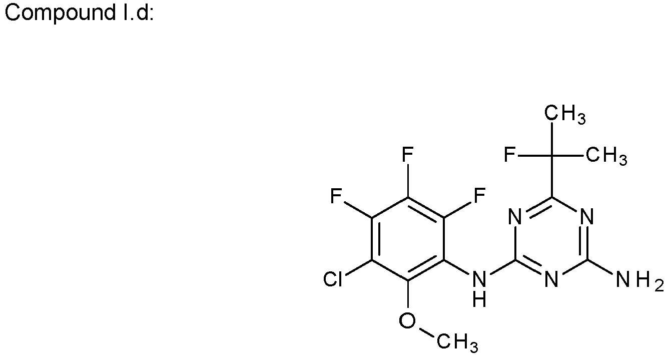

The compounds I.a to I.d were used as an 5 % EC formulation with 375 L/ha water carrier and 0,5% Adjuvant (Dash) was used.

The test plants used in the greenhouse / field experiments were of the following species:

| **EPPO** code | Scientific name |
|---|---|
| ABUTH | *Abutilon theophrasti* |
| ALOMY | *Alopercurus myosuroides* |
| AMARE | *Amaranthus retroflexus* |
| APESV | *Apera spica-venti* |
| AVEFA | *Avena fatua* |
| BRADC | *Brachiaria decumbens* |
| BROSE | *Bromus secalinus* |
| BRSNS | rape (spring) |
| CHEAL | *Chenopodium album* |
| COMBE | *Commelina benghalensis* |
| DIGSA | *Digitaria sanguinalis* |
| ECHCG | *Echinochloa crus-galli* |
| GALAP | *Galium aparine* |
| GERPU | *Geranium pusillum* |
| GLXMA | *Glycine max* |
| HORVS | *Hordeum vulgare* (spring barley) |
| HORVW | *Hordeum vulgare* (winter barley) |
| LOLMU | *Lolium multiflorum* |
| MATIN | *Matricaria inodora* |
| MERAN | *Mercurialis annua* |
| ORYSA | *Oryza sativa* |
| PAPRH | *Papaver rhoeas* |
| POAAN | Poa *annua* |
| POLAV | *Polygonum aviculare* |
| POLCO | *Polygonum convolvulus* |
| RAPRA | *Raphanus raphanistrum* |
| SEBEX | *Sesbania exaltata* |
| SETFA | *Setaria faberi* |
| SETVI | *Setaria viridis* |
| SINAR | *Sinapis arvensis* |
| THLAR | *Thlaspi arvense* |
| TRZAS | *Triticum aestivum* (spring wheat) |
| TRZAW | *Triticum aestivum* (winter wheat) |
| VERPE | *Veronica persica* |
| ZEAMX | Zea *mays* |

The results of these tests are given below in the use examples and demonstrate the synergistic effect of the mixtures comprising at least one compound of the formula (I) and at least one herbicide B.

In this context, a.i. means active ingredient, based on 100 % active ingredient. The compounds I.a to I.d were used as an EC formulation, if not indicated otherwise.

As indicated application was either post emergent (POST) at the respective growth stage (GS) of the weed (BBCH code), or pre-emergent (PRE).

Assessment was 20 days after treatment (DAT), if not indicated otherwise.

## Claims

1. A method for selectively controlling weeds in soy, which comprises applying to the crop cultivation area an effective amount of a herbicidal mixture comprising as a component 1) a herbicide A selected from a compound of formula (I) and salts of the compound of formula (I) 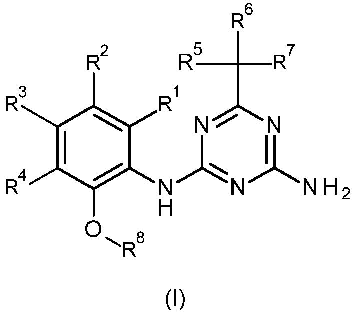 wherein
R¹ is F;
R² is selected from the group consisting of H, halogen;
R³ is H, F;
R⁴ is selected from the group consisting of F, C!, Br, I;
R⁵ is selected from the group consisting of H, halogen and C₁-C₆-alkyl;
R⁶ is selected from the group consisting of H, halogen, CN, C₁-C₆-alkyl, C₁-C₆-haloalkyl, C₁-C₆-alkoxy and C₁-C₆-haloalkoxy;
R⁷ is selected from the group consisting of H, halogen, CN, C₁-C₆-alkyl, C₁-C₆-haloalkyl, C₁-C₆-alkoxy and C₁-C₆-haloalkoxy;
R⁸ is selected from the group consisting of C₁-C₆-alkyl, C₂-C₆-alkenyl, C₂-C₆-alkynyl; and
as component 2) at least one further compound selected from following compounds B:
B1) is selected from the group of the lipid biosynthesis inhibitors: cyhalofop-butyl, profoxydim, triallate, pinoxaden;
B2) is selected from the group of the ALS inhibitors: bispyribac-sodium, bensulfuron-methyl, ethoxysulfuron, imazapic, imazapyr, imazethapyr, propyrisulfuron, pyribenzoxim, triafamone;
B3) is selected from the group of the photosynthesis inhibitors: atrazine, hexazinone, metribuzin, diuron, bentazon and bentazon-sodium;
B4) is selected from the group of the protoporphyrinogen-IX oxidase inhibitors: epyrifenacil, flumioxazin, pyraclonil, saflufenacil, trifludimoxazin, 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy] acetic acid ethyl ester (CAS 2158274-50-9);
B5) is selected from the group of the bleacher herbicides:
PDS inhibitors: beflubutamid, bixlozone, diflufenican, fluridone, flurochloridone, flurtamone, norflurazon, picolinafen, 4-(3-trifluoromethylphenoxy)-2-(4-trifluoromethylphenyl)pyrimidine (CAS 180608-33-7), rimisoxafen, HPPD inhibitors: benzobicyclon, isoxaflutole, mesotrione, tembotrione, tolpyralate, topramezone;
B6) from the group of the EPSP synthase inhibitors:
glyphosate, glyphosate-isopropylammonium, glyposate-potassium and glyphosate-trimesium (sulfosate);
B7) from the group of the glutamine synthase inhibitors:
glufosinate, glufosinate-P, glufosinate-ammonium and glufosinate-P-ammonium.
B9) is selected from the group of the mitosis inhibitors:
compounds of group K1: pendimethalin, trifluralin and icafolin methyl;
B10) is selected from the group of the VLCFA inhibitors:
butachlor, dimethenamid-P, metolachlor-S, pretilachlor, pyroxasulfone;
c13) is selected from the group of the auxinic herbicides:
2,4-D and its salts and esters such as clacyfos, 2,4-DB and its salts and esters, dicamba and its salts and esters, florpyrauxifen,
B15) is selected from the group of the other herbicides: bromobutide, chlorflurenol, cinmethylin, tetflupyrolimet.

2. The method as claimed in claim 1, wherein the herbicide A is selected from a compound of formula (I) wherein
R¹ is F;
R² is halogen;
R³ is H, F;
R⁴ is selected from the group consisting of F, C!, Br, I;
R⁵ is halogen;
R⁶ is C₁-C₆-alkyl;
R⁷ is C₁-C₆-alkyl;
R⁸ is C₁-C₆-alkyl.

3. The method as claimed in claim 1 or 2, wherein the herbicide A is selected from the compounds I.a to I.d:

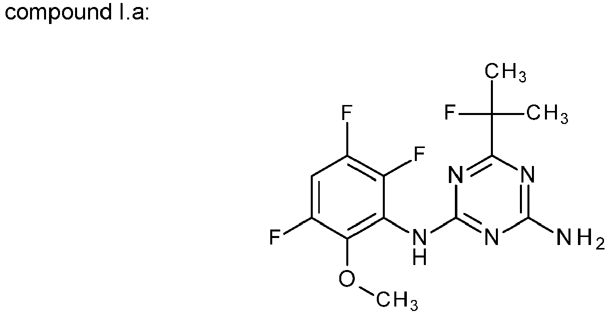

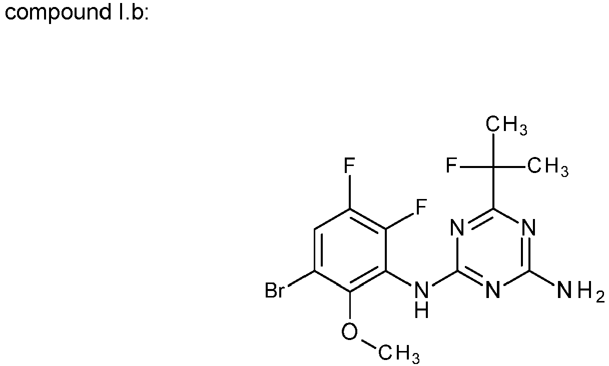

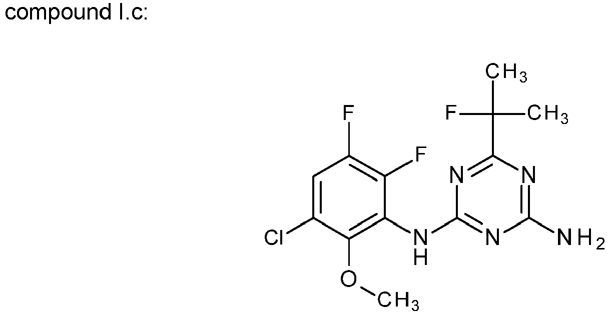

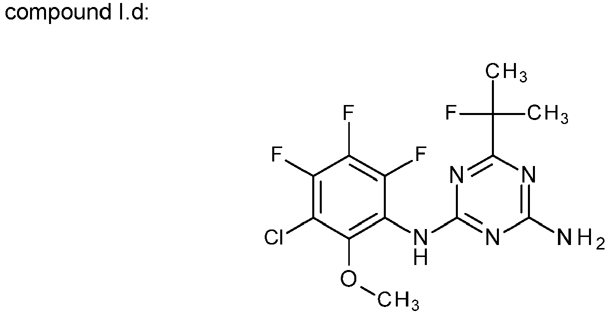

4. The method as claimed in anyone of claims 1 to 3, wherein the component 2) is selected from following compounds B:
imazethapyr;
metribuzin;
epyrifenacil, flumioxazin, saflufenacil, trifludimoxazin, 2-[2-[[3-chloro-6-[3,6-dihydro-3-methyl-2,6-dioxo-4-(trifluoromethyl)-1 (2H)-pyrimidinyl]-5-fluoro-2-pyridinyl]oxy]phenoxy] acetic acid ethyl ester (CAS 2158274-50-9);
isoxaflutole;
glyphosate, glyphosate-isopropylammonium, glyposate-potassium and glyphosate-trimesium (sulfosate);
glufosinate, glufosinate-P, glufosinate-ammonium and glufosinate-P-ammonium.
icafolin methyl;
dimethenamid-P, pyroxasulfone;
dicamba and its salts and esters;

5. The method as claimed in anyone of claims 1 to 4, wherein it is applied pre- or post-emergence of the crop, up to growth stage 29-37 of the crop.

6. The method as claimed in anyone of claims 1 to 5, wherein the herbicide A is applied up to growth stage 37 of the weeds.

7. The method as claimed in anyone of claims 1 to 6, wherein the ratio of the herbicide A to herbicide B in the mixture is from 10:1 to 1:6000.

8. The method as claimed in anyone of claims 1 to 7, wherein the ratio of the herbicide A to herbicide B in the mixture is from 1:1 to 1:2000.

9. The method as claimed in anyone of claims 1 to 8, wherein the ratio of the herbicide A to herbicide B in the mixture is from 1:1 to 1:1500.

10. The method as claimed in any one of claims 1 to 9, wherein the weeds are dicots.

11. The method as claimed in claim 10, wherein the dicots are selected from the group comprising *Aeschynomene denticulate, Abutilon theophrasti, Amaranthus palmeri, Amaranthus retroflexus, Amaranthus tuberculatus, Amaranthus viridis Ambrosia artemisiifolia, Arctotheca calendula, Capsella bursa-pastoris, Chenopodium album, Euphorbia heterophylla, Fallopia convolvulus, Galinsoga parviflora, Ipomoea hederacea, Kochia scoparia, Matricaria inodora, Mercurialis annua, Monochoria vaginalis, Papaver rhoeas, Portulaca oleracea, Rapistrum rugosum, Sinapis alba, Spermacoce verticillate, Sphenoclea zeylanica, Stellaria media, Veronica hederifolia.*

12. The method as claimed in anyone of claims 1 to 11, wherein the herbicidal mixture is applied one, two or three times until harvest of the crop, preferably once until harvest of the crop.

13. A composition comprising the herbicidal mixture according to claims 1 to 12 and at least one auxiliary, which is customary for formulating crop protection compounds.

14. The composition as claimed in claim 13, comprising a further herbicide.

15. The use of the herbicidal mixture according to claims 1 to 12 or the composition according to claims 13 or 14 for selectively controlling weeds in soy.
